# EUROPÄISCHE PATENTSCHRIFT

(11) **EP 1 528 309 B1**
(45) Veröffentlichungstag und Bekanntmachung des Hinweises auf die Patenterteilung: **09.07.2008**
(21) Anmeldenummer: 04024492.3
(22) Anmeldetag: 14.10.2004
(51) Int. Cl.: F16L 19/04, F16L 19/028

(54) **Schraubverbindungsvorrichtung zur Verbindung der gebördelten Rohrenden zweier Rohre**
Swivel nut connection for flanged pipes
Raccord vissé pour des tuyaux à collerettes

(30) Priorität: 27.10.2003 EP 03024646
(43) Veröffentlichungstag der Anmeldung: 04.05.2005
(73) Patentinhaber: TI Automotive (Heidelberg) GmbH, 69123 Heidelberg (DE)
(72) Erfinder: Sausner, Andreas, Dipl.-Ing., 60389 Frankfurt (DE); Weick, Georg, Dipl.-Ing., 68723 Plankstadt (DE)
(74) Vertreter: Rohmann, Michael

(56) Entgegenhaltungen:
- EP-A- 1 236 946
- DE-A- 2 407 268
- DE-A- 4 425 827
- DE-U- 20 002 170
- PATENT ABSTRACTS OF JAPAN Bd. 1996, Nr. 01, 31. Januar 1996 (1996-01-31) -& JP 07 248079 A (USUI INTERNATL IND CO LTD), 26. September 1995 (1995-09-26)

## Beschreibung

Die Erfindung betrifft eine Schraubverbindungsvorrichtung zur Verbindung der gebördelten Rohrenden zweier Rohre. ― Der Begriff Schraubverbindungsvorrichtung umfasst die Vorrichtungselemente die zur Verbindung der Rohrenden der beiden Rohre erforderlich sind. Die Erfindung bezieht sich insbesondere auf eine Schraubverbindung von Rohren, die im Hydraulikbereich eingesetzt werden bzw. die als Bremsleitungen in Kraftfahrzeugen verwendet werden.

Aus der Praxis ist eine Schraubverbindung zweier Rohre bekannt, bei der das Rohrende des einen Rohres mit einem sogenannten E-Bördel versehen ist und das Rohrende des anderen Rohres mit einem dazu komplementären F-Bördel versehen ist. E-Bördel und F-Bördel sind beispielsweise in DIN 74234 definiert. Bei der bekannten Schraubverbindung werden beide Bördel durch eine Verschraubung mit Hilfe einer Schraubenmutter und einer zugeordneten Schraube mit einer hohen Anpresskraft gegeneinander gedrückt. Es soll eine dichte bzw. hochdruckdichte Verbindung der Rohrenden erzielt werden. Diese aus dem Stand der Technik bekannte Schraubverbindung weist jedoch einige unerwünschte Nachteile auf. Bei der Anformung des E-Bördels an das eine Rohrende wird dieses Rohrende zumindest in bestimmten Bereichen relativ weitgehend plastisch verformt. Aufgrund der Verfestigung durch Kaltverformung ergibt sich ein negativer Einfluss im Hinblick auf die Langzeitbeständigkeit der Anformung. Dieser negative Einfluss kommt insbesondere bei mechanischen Belastungen der Schraubverbindung, beispielsweise bei Beaufschlagung mit Vibrationen besonders zum Tragen. Außerdem erfolgt bei der Herstellung der Schraubverbindung am Ende des Verschraubungsprozesses ein Mitdrehen eines Rohrendes oder beider Rohrenden. Häufig erfolgt auch eine unerwünschte Drehung eines Rohrendes relativ zur Schraubverbindungsvorrichtung. Da die Rohre normalerweise an ihrem der Schraubverbindung gegenüberliegenden Ende fixiert sind, findet dabei eine Rohrtorsion statt. Diese Rohrtorsion übt ein Drehmoment auf die Schraubverbindung aus, das ein Lösen der Schraubverbindung unterstützt. Aus diesem Grunde wird in der Praxis die Schraubverbindung bzw. die Verschraubung bis über ihre Grenzen hin angezogen. Wenn die Rohre bei der Herstellung der Schraubverbindung gegeneinander verdreht werden, kann eine Beschädigung der Dichtflächen aufgrund der Reibung der beiden Bördel aufeinander auftreten. Es versteht sich, dass dies nachteilhaft ist. Im Ergebnis ist die bekannte Schraubverbindung verbesserungsfähig. Eine solche Schraubverbindung wird z.B. in Dokument DE 4 425 827 A1 offenbart.

Demgegenüber liegt der Erfindung das technische Problem zugrunde, eine Schraubverbindung bzw. eine Schraubverbindungsvorrichtung der eingangs genannten Art anzugeben, mit der auf einfache Weise eine langfristig dichte bzw. hochdruckdichte Verbindung der beiden Rohrenden verwirklicht werden kann, bei der die vorstehend erläuterten Nachteile vermieden werden und bei der insbesondere unerwünschte Drehungen der Rohrenden beim Herstellen der Schraubverbindung vermieden bzw. minimiert werden können.

Zur Lösung dieses technischen Problems lehrt die Erfindung eine Schraubverbindungsvorrichtung zur Verbindung der gebördelten Rohrenden zweier Rohre,
wobei ein Distanzelement vorgesehen ist, welches Distanzelement an einem ersten Ende eine erste Formschlussausnehmung zur formschlüssigen Aufnahme des Bördels am Rohrende des einen (ersten) Rohres sowie an einem zweiten Ende eine zweite Formschlussausnehmung zur formschlüssigen Aufnahme des Bördels am Rohrende des anderen (zweiten) Rohres aufweist,
wobei weiterhin eine Schraubenmutter zur Aufnahme des einen Rohrendes vorgesehen ist, in welche Schraubenmutter das Distanzelement im Verbindungszustand mit der Maßgabe eingeführt ist, dass das von der Schraubenmutter aufgenommene Rohrende mit seinem Bördel in die zugeordnete Formschlussausnehmung des Distanzelementes einfasst,
wobei fernerhin eine Schraube zur Aufnahme des anderen Rohrendes vorgesehen ist, welche Schraube im Verbindungszustand mit ihrem aufgenommenen Rohrende in die Mutter mit der Maßgabe eingeschraubt ist, dass das von der Schraube aufgenommene Rohrende mit seinem Bördel in die zugehörige Formschlussausnehmung des Distanzelementes einfasst
und wobei die Schraubenmutter und/oder der Bördel des im Verbindungszustand in der Schraubenmutter aufgenommenen Rohrendes Formschlusselemente aufweisen, welche Formschlusselemente mit der Maßgabe ausgebildet sind, dass das aufgenommene Rohrende gegen eine Verdrehung relativ zur Schraubenmutter gesichert ist.

Mit dem Begriff "im Verbindungszustand" ist der Zustand bei bereits hergestellter Schraubverbindung zwischen den beiden gebördelten Rohrenden gemeint. Die Erfindung bezieht sich auf eine Schraubverbindungsvorrichtung aus Schraubenmutter, Schraube und Distanzelement bzw. die Erfindung bezieht sich auf eine Schraubverbindungsvorrichtung die im Wesentlichen aus der Schraubenmutter, der Schraube und dem Distanzelement besteht. Gegenstand der Erfindung ist aber auch das Schraubverbindungsaggregat aus Schraubenmutter, Schraube, Distanzelement und den beiden Rohren bzw. Rohrenden die verbunden werden.

Nach der Erfindung weist die Schraubenmutter innenseitige Formschlusselemente auf und weist der Bördel des im Verbindungszustand in der Schraubenmutter aufgenommenen Rohrendes Komplementär-Formschlusselemente auf und die innenseitigen Formschlusselemente der Schraubenmutter greifen im Verbindungszustand in die Komplementär-Formschlusselemente am Bördel ein. Auf diese Weise wird das aufgenommene Rohrende gegen eine Verdrehung relativ zur Schraubenmutter effektiv gesichert. Bei den Formschlusselementen handelt es sich nach einer Ausführungsform um in der Schraubenmutter vorgesehene Einkerbungen, die vorzugsweise radial orientiert sind. Die Komplemen tär-Formschlusselemente am Bördel sind dann zweckmäßigerweise als entsprechende Vorsprünge oder Nasen ausgebildet, die formschlüssig in die Einkerbungen an der Schraubenmutter einfassen können. Nach einer anderen Ausführungsform können auch die Komplementär-Formschlusselemente des Bördels als Einkerbungen ausgeführt sein und dann sind die Formschlusselemente an der Schraubenmutter vorzugsweise als Vorsprünge, Nasen bzw. Stege ausgebildet, die in die Einkerbungen am Bördel formschlüssig einfassen können. Die Tiefe der Einkerbungen bzw. die Höhe der Vorsprünge, Nasen oder Stege wird erfindungsgemäß so gewählt, dass beim Formschluss das aufgenommene Rohrende gegen eine Verdrehung relativ zur Schraubenmutter gesichert ist.

Nach einer alternativen Ausführung der Erfindung weist lediglich die Schraubenmutter innenseitige Formschlusselemente auf, welche Formschlusselemente mit der Maßgabe ausgebildet sind, dass sie beim Herstellen der Schraubverbindung in den Bördel des im Verbindungszustand in der Schraubenmutter aufgenommenen Rohrendes einschneiden, so dass sich dabei Komplementär-Formschlusselemente in dem Bördel bilden. Der Bördel hat bei dieser Ausführungsform von vornherein also keine Komplemen tär-Formschlusselemente, sondern diese Komplementär-Formschlusselemente werden erst durch eine entsprechende Pressung beim Herstellen der Schraubverbindung unter Einwirkung der Formschlusselemente in den Bördel gleichsam eingeformt. Zweckmäßigerweise handelt es sich bei den Formschlusselementen an der Schraubenmutter um Vorsprünge, Nasen bzw.

Stege, die in den Bördel einschneiden können. Es liegt im Rahmen der Erfindung, dass das Material für den Bördel entsprechend gewählt wird, so dass ein solches Einschneiden und die Bildung der Komplementär-Formschlusselemente auf einfache Weise möglich ist.

Es liegt im Rahmen der Erfindung, dass es sich bei dem Distanzelement um ein dichtendes Distanzelement handelt. Mit anderen Worten weist jede Formschlussausnehmung des Distanzelementes eine Dichtfläche bzw. Dichtflächen auf, die an einer komplementären Dichtfläche des zugeordneten Bördels zur Anlage kommt. ― Es liegt weiterhin im Rahmen der Erfindung, dass die Schraubenmutter ein Innengewinde aufweist und dass die Schraube ein komplementäres Außengewinde aufweist, mit dem sie im Verbindungszustand in das Innengewinde der Schraubenmutter eingreift. Von der Schraubenmutter wird ein erstes Rohrende aufgenommen. Dabei handelt es sich um das Rohrende, das bei noch nicht in die Schraubenmutter eingeführter Schraube bereits in der Schraubenmutter aufgenommen ist. Wenn die Schraube mit dem aufgenommenen zweiten Rohrende in die Schraubenmutter eingeführt ist, umgibt die Schraubenmutter gleichsam auch das in der Schraube aufgenommene zweite Rohrende.

Nach sehr bevorzugter Ausführungsform, der im Rahmen der Erfindung besondere Bedeutung zukommt, ist zumindest eine Formschlussausnehmung, sehr bevorzugt beide Formschlussausnehmungen des Distanzelementes zur formschlüssigen Aufnahme eines Bördels am zugeordneten Rohrende ausgebildet, welcher Bördel eine rohraußenseitige konusförmige Anschlussfläche aufweist, wobei sich der zugeordnete Konus zum Stirnende des Rohrendes hin verjüngt. Die Formschlussausnehmung des Distanzelementes weist eine entsprechende komplementäre innenseitige konusförmige Komplementär-Anschlussfläche auf. Es liegt im Rahmen der Erfindung, dass zumindest eine Formschlussausnehmung, sehr bevorzugt beide Formschlussausnehmungen des Distanzelementes zur formschlüssigen Aufnahme eines F-Bördels am zugeordneten Rohrende ausgebildet ist. Das Distanzelement weist also zumindest eine, bevorzugt zwei zu einem F-Bördel komplementäre Formschlussausnehmungen an den beiden Enden auf. Es liegt somit im Rahmen der Erfindung, dass beide zu verbindende Rohrenden ein F-Bördel aufweisen. Im Verbindungszustand schließt also an den F-Bördel des ersten Rohrendes die erste Formschlussausnehmung des Distanzelementes an und am gegenüberliegenden Ende des Distanzelementes fasst der F-Bördel des zweiten Rohrendes in die zweite Formschlussausnehmung des Distanzelementes ein. Nach bevorzugter Ausführungsform erfolgt die Verbindung F-Bördel/ Distanzelement / F-Bördel ohne Zwischenschaltung weiterer Elemente.

Nach einer Ausführungsform der Erfindung ist das Distanzelement im Verbindungszustand in eine Aufnahmeöffnung der Schraubenmutter eingesteckt. Bei dieser Ausführungsform wird das Distanzelement nicht durch eine Schraubverbindung in der Schraubenmutter gehalten sondern ist lediglich formschlüssig in die Aufnahmeöffnung der Schraubenmutter eingeführt. Zweckmäßigerweise wird das Distanzelement dabei durch zumindest eine an der Oberfläche bzw. Innenoberfläche der Aufnahmeöffnung vorgesehene Noppe gehalten. Das Distanzelement wird vorzugsweise über die Noppe in die Aufnahmeöffnung eingeschoben und rastet hinter der Noppe gleichsam ein. Nach bevorzugter Ausführungsform sind mehrere solcher Noppen über den Innenumfang der Aufnahmeöffnung verteilt. Es liegt im Rahmen der Erfindung, dass die Aufnahmeöffnung der Schraubenmutter zylinderförmig ausgebildet ist.

Nach einer anderen bevorzugten Ausführungsform der Erfindung weist die Aufnahmeöffnung der Schraubenmutter ein Innengewinde auf und weist das Distanzelement ein zu dem Innengewinde komplementäres Außengewinde auf. Das Distanzelement ist nach dieser Ausführungsform im Verbindungszustand in die Aufnahmeöffnung der Schraubenmutter eingeschraubt. Das Distanzelement ist dann also durch eine Schraubverbindung in der Aufnahmeöffnung der Schraubenmutter fixiert.

Es liegt im Rahmen der Erfindung, dass die Aufnahmeöffnung der Schraubenmutter sowohl zur Aufnahme des Distanzelementes als auch zur Aufnahme der Schraube vorgesehen ist. Die Schraube wird mit ihrem Außengewinde in das Innengewinde der Aufnahmeöffnung eingeschraubt.

Es liegt fernerhin im Rahmen der Erfindung, dass die Schraubenmutter einen Aufnahmekanal mit gegenüber der Aufnahmeöffnung reduziertem Durchmesser aufweist, welcher Aufnahmekanal zur Aufnahme des einen (ersten) Rohrendes vorgesehen ist. Dieses (erste) Rohrende durchgreift also den Aufnahmekanal der Schraubenmutter. Die Schraube weist zweckmäßigerweise ebenfalls einen Aufnahmekanal zur Aufnahme des anderen (zweiten) Rohrendes auf.

Es liegt im Rahmen der Erfindung, dass die Schraubenmutter eine Anschlagfläche aufweist, welche Anschlagfläche den Bördel des in der Schraubenmutter aufgenommenen (ersten) Rohrendes im Verbindungszustand hinterfasst. Die Anschlagfläche ist zweckmäßigerweise am Übergang zwischen Aufnahmekanal und Aufnahmeöffnung der Schraubenmutter angeordnet. Es liegt fernerhin im Rahmen der Erfindung, dass die Schraube eine Stirnfläche aufweist, welche Stirnfläche den Bördel des in der Schraube aufgenommenen (zweiten) Rohrendes hinterfasst.

Wie oben bereits dargelegt liegt es im Rahmen der Erfindung, dass die Schraubenmutter innenseitige Formschlusselemente zum Eingriff in Komplementär-Formschlusselemente an dem Bördel des in der Schraubenmutter aufgenommenen Rohrendes aufweist, wobei die Komplementär-Formschlusselemente in dem Bördel bereits vorhanden sein können oder aber bei Herstellung der Schraubverbindung durch Einschneiden der Formschlusselemente der Schraubenmutter erzeugt wurden. Zweckmäßigerweise sind die Formschlusselemente der Schraubenmutter an der vorstehend genannten Anschlagfläche der Schraubenmutter vorgesehen.

Es liegt im Rahmen der Erfindung, dass das Distanzelement an zumindest einer Formschlussausnehmung, vorzugsweise an beiden Formschlussausnehmungen jeweils eine Oberfläche aufweist, die mit der Maßgabe eingerichtet ist, dass das von einem Rohrende aufgebrachte Drehmoment sicher übertragen wird. Bei der Oberfläche der Formschlussausnehmung kann es sich beispielsweise um eine profilierte Oberfläche handeln. Es liegt in diesem Zusammenhang im Rahmen der Erfindung, dass die Oberfläche der Formschlussausnehmung Formschlusselemente zum Eingriff in Komplemen tär-Formschlusselemente an der Anschlussfläche des Bördels des zugeordneten Rohrendes aufweist. Durch die letzt genannten erfindungsgemäßen Ausführungsformen kann effektiv verhindert werden, dass sich die Rohrenden relativ zum Distanzelement bzw. relativ zueinander verdrehen.

Der Erfindung liegt die Erkenntnis zugrunde, dass mit der erfindungsgemäßen Schraubverbindungsvorrichtung auf einfache und wenig aufwendige Weise eine langfristig dichte bzw. hochdruckdichte Verbindung erzeugt werden kann. Im Betrieb der Schraubverbindungsvorrichtung finden insbesondere keine nachteilhaften Beeinträchtigungen der Dichtflächen statt. Mit der erfindungsgemäßen Schraubverbindungsvorrichtung kann ein Verdrehen der mit einander zu verbindenden Rohre relativ zu einander während der Verschraubung verhindert werden. Der Erfindung liegt insbesondere die wesentliche Erkenntnis zugrunde, dass es in diesem Zusammenhang darauf ankommt, ein Verdrehen des von der Schraubenmutter aufgenommenen Rohres relativ zur Schraubenmutter zu verhindern. Im Ergebnis können die Rohre bzw. die Schraubverbindungsvorrichtung ohne Probleme beispielsweise in einem Kraftfahrzeug montiert werden. Aufgrund der vermiedenen Drehung der Rohre relativ zum Distanzelement kann eine reibungsbedingte Beschädigung der Dichtflächen verhindert werden. Insbesondere die Reibung zwischen schraubenseitigem Bördel und Distanzelement kann durch eine geeignete Geometrie des Distanzelementes relativ groß gehalten werden. Wenn diese Reibung zwischen schraubenseitigem Bördel und Distanzelement größer ist als die Reibung zwischen Schraube und Bördelrückseite, wird sich bei der Herstellung der Schraubverbindung die Schraube relativ zu dem darin aufgenommenen Rohr verdrehen. Eine Drehung der beiden Rohre relativ zueinander wird also unterdrückt und ein damit verbundenes Lösemoment kann somit ebenfalls vermieden werden.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Darstellung einer Schraubverbindung nach dem Stand der Technik,
- Fig. 2: ein Längsschnitt durch eine erfindungsgemäße Schraubverbindung,
- Fig. 3: einen Schnitt durch den Gegenstand nach Fig. 2,
- Fig. 4: eine perspektivische Darstellung der erfindungsgemäßen Schraubverbindung und
- Fig. 5: eine perspektivische Darstellung der Schraubenmutter.

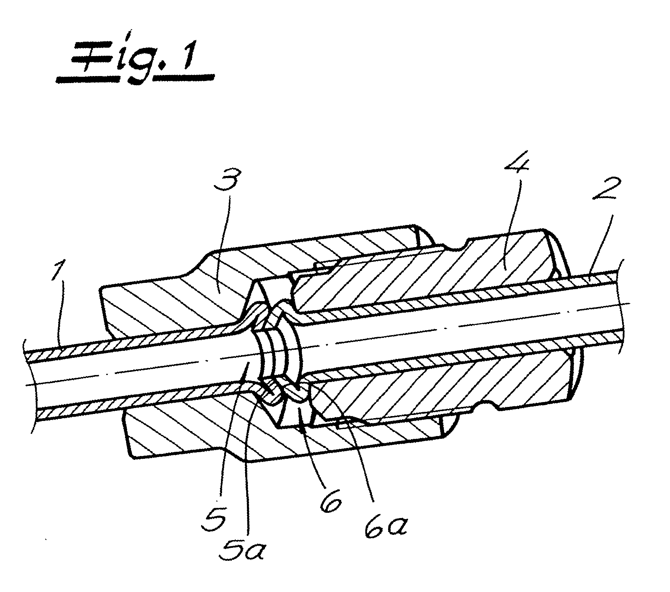

Fig. 1 zeigt eine Schraubverbindung bzw. eine Schraubverbindungsvorrichtung nach dem Stand der Technik. Die beiden zu verbindenden Rohrenden 1, 2 werden durch eine Verschraubung mit Hilfe einer Schraubenmutter 3 und einer Schraube 4 miteinander verbunden. Die beiden Rohrenden 1, 2 sind gebördelt ausgeführt. Das erste Rohrende 1 weist einen E-Bördel 5 auf, während das zweite Rohrende 2 einen F-Bördel 6 aufweist. Es ist erkennbar, dass der E-Bördel 5 eine Anschlussfläche 5a aufweist die konusförmig ausgebildet ist, wobei sich der betreffende Konus nach innen, d. h. zur Rohrseite hin verjüngt. Der F-Bördel 6 weist ebenfalls eine konusförmige Anschlussfläche 6a auf, wobei dieser Konus sich aber nach außen, dass heißt zum Stirnende des Rohrendes 2 hin verjüngt. Die beiden Bördel 5, 6 werden durch die Verschraubung von Schraubenmutter 3 und Schraube 4 mit großer Anpresskraft gegeneinander gedrückt. Auf diese Weise soll eine dichte bzw. hochdruckdichte Verbindung hergestellt werden. Die aus dem Stand der Technik bekannte Schraubverbindung zeichnet sich aber durch die oben bereits erläuterten Nachteile aus.

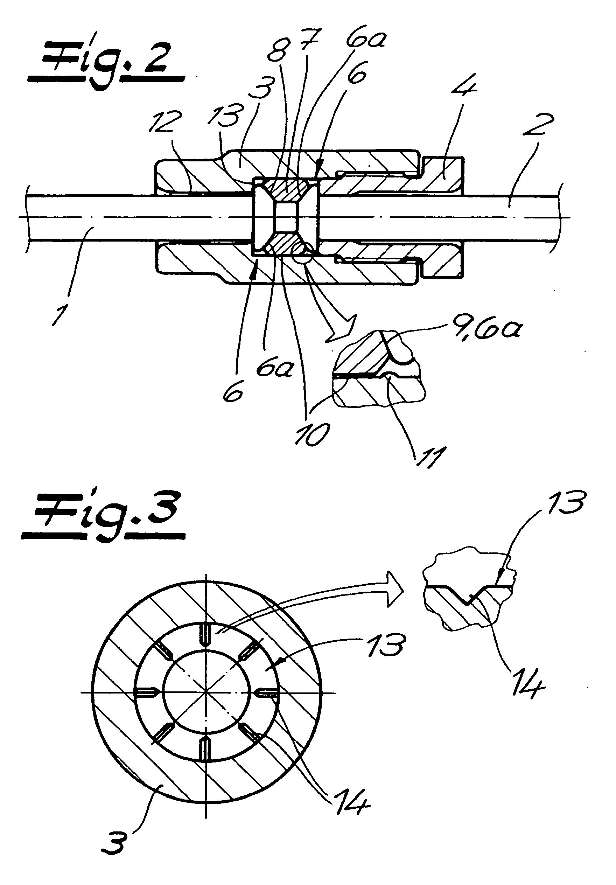

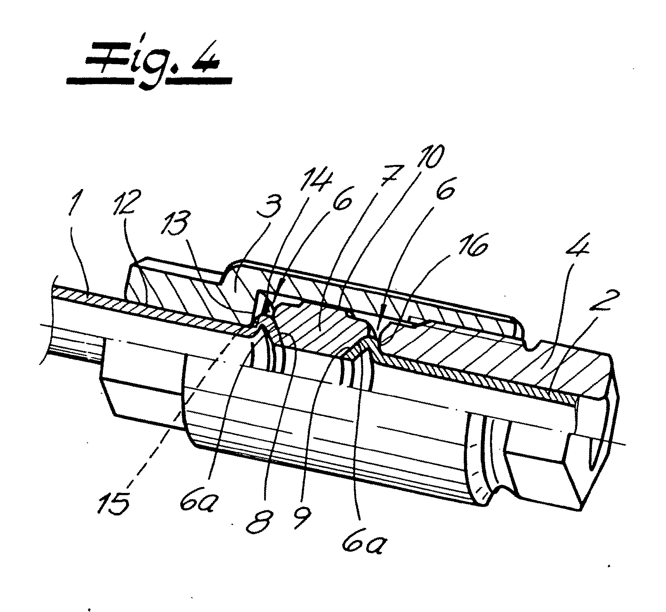

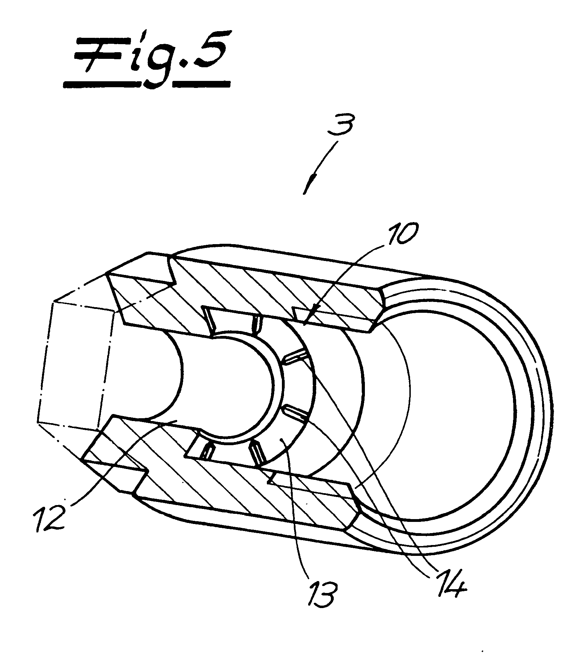

Die Fig. 2 bis 5 zeigen eine erfindungsgemäße Schraubverbindung bzw. Schraubverbindungsvorrichtung zur Verbindung der gebördelten Rohrenden 1, 2 zweier Rohre. Erfindungsgemäß wird ein Distanzelement 7 eingesetzt, welches Distanzelement 7 an einem ersten Ende eine erste Formschlussausnehmung 8 aufweist und an einem zweiten Ende eine zweite Formschlussausnehmung 9 aufweist. Sowohl die erste Formschlussausnehmung 8 als auch die zweite Formschlussausnehmung 9 ist zur formschlüssigen Aufnahme eines Bördels 6 am zugeordneten Rohrende 1, 2 vorgesehen, welches Bördel 6 eine rohraußenseitige konusförmige Anschlussfläche aufweist, wobei sich der betreffende Konus zum Stirnende des Rohrendes 1, 2 hin verjüngt. Es liegt dabei im Rahmen der Erfindung, dass sowohl die erste Formschlussausnehmung 8 als auch die zweite Formschlussausnehmung 9 zur formschlüssigen Aufnahme eines F-Bördels 6 an jedem Rohrende 1, 2 vorgesehen sind. Solche F-Bördel 6 sind im Ausführungsbeispiel nach den Fig. 2 und 4 an den Rohrenden 1, 2 vorgesehen. Es versteht sich, dass das Distanzelement 7 innen hohl ausgebildet ist, damit die durch die Rohre geleitete Flüssigkeit durch das Distanzelement 7 gelangen kann. Die Formschlussausnehmungen 8, 9 und die zugeordneten F-Bördel 6 weisen Dichtflächen auf, die im Verbindungszustand aneinandergepresst sind. Die Fig. 2 und 4 zeigen, dass die Schraubenmutter 3 zur Aufnahme des ersten Rohrendes 1 vorgesehen ist und dass im Verbindungszustand das Distanzelement 7 in die Schraubenmutter 3 mit der Maßgabe eingeführt ist, dass das von der Schraubenmutter 3 aufgenommene erste Rohrende 1 mit seinem F-Bördel 6 in die zugeordnete Formschlussausnehmung 8 des Distanzelementes 7 einfasst bzw. gedrückt wird. Im Ausführungsbeispiel nach den Fig. 2 und 4 ist das Distanzelement 7 im Verbindungszustand lediglich in die Aufnahmeöffnung 10 der Schraubenmutter 3 eingesteckt. Dabei wird das Distanzelement 7 durch über den Innenumfang der Aufnahmeöffnung 10 verteilte Noppen 11 in seiner Position gehalten. Die Schraubenmutter 3 weist im Übrigen einen Aufnahmekanal 12 mit gegenüber der Aufnahmeöffnung 10 reduziertem Durchmesser auf. In diesem Aufnahmekanal 12 wird das erste Rohrende 1 formschlüssig aufgenommen.

Die Schraube 4 ist zur Aufnahme des zweiten Rohrendes 2 vorgesehen. Diese Schraube 4 ist im Verbindungszustand mit ihrem aufgenommenen zweiten Rohrende 2 in die Schraubenmutter 3 mit der Maßgabe eingeschraubt, dass das von der Schraube 4 aufgenommene Rohrende 2 mit seinem F-Bördel 6 in die zugeordnete Formschlussausnehmung 9 des Distanzelementes 7 einfasst bzw. gedrückt wird. Die Fig. 2 und 4 zeigen, dass die Aufnahmeöffnung 10 der Schraubenmutter 3 sowohl zur Aufnahme des Distanzelementes 7 als auch zur Aufnahme der Schraube 4 mit dem aufgenommenen zweiten Rohrende 2 vorgesehen ist.

In den Fig. 2, 4 und 5 ist erkennbar, dass die Schraubenmutter 3 am Übergang zwischen Aufnahmekanal 12 und Aufnahmeöffnung 10 eine Anschlagfläche 13 aufweist. Die Anschlagfläche 13 hinterfasst den F-Bördel 6 des im Aufnahmekanal 12 der Schraubenmutter 3 aufgenommenen ersten Rohrendes 1. Im Bereich der Anschlagfläche 13 weist die Schraubenmutter 3 innenseitige Formschlusselemente in Form von Einkerbungen 14 auf. Im Ausführungsbeispiel weisen diese Einkerbungen 14 einen V-förmigen Querschnitt auf. Sie können auch beispielsweise einen U-förmigen Querschnitt aufweisen. Zweckmäßigerweise und im Ausführungsbeispiel sind die Einkerbungen 14 in radialer Richtung bezüglich der Längsachse der Schraubenmutter 3 angeordnet bzw. orientiert. In diese Einkerbungen 14 greifen im Verbindungszustand Komplementär-Formschlusselemente ein, die an der Rückseite des F-Bördels des ersten Rohrendes 1 angeordnet sind. Diese Komplementär-Formschlusselemente des F-Bördels des ersten Rohrendes 1 sind vorzugsweise in Form von Nasen 15 ausgebildet, die formschlüssig in die Einkerbungen 14 der Schraubenmutter 3 eingreifen können. Es liegt auch im Rahmen der Erfindung, dass gemäß einer nicht in den Figuren dargestellten Ausführungsform zunächst Formschlusselemente lediglich an der Schraubenmutter 3 vorgesehen sind. Erst beim Herstellen der Schraubverbindung und beim entsprechenden Zusammenpressen der Bauelemente erzeugen dann diese Formschlusselemente der Schraubenmutter 3 unter dem einwirkenden Druck entsprechende Komplementär-Formschlusselemente an dem Bördel des ersten Rohrendes 1. Diese Komplementär-Formschlusselemente werden also gleichsam erst bei der Herstellung der Schraubverbindung und beim Zusammenpressen der Bauelemente erzeugt. Formschlusselemente und Komplementär-Formschlusselemente sind mit der Maßgabe ausgebildet, dass das in der Schraubenmutter aufgenommene erste Rohrende 1 gegen eine Verdrehung relativ zur Schraubenmutter 3 gesichert ist. ― Die Schraube 4 weist im Übrigen eine Stirnfläche 16 auf, die den F-Bördel 6 des in der Schraube 4 aufgenommenen zweiten Rohrendes 2 hinterfasst.

## Patentansprüche

1. Schraubverbindungsvorrichtung zur Verbindung der gebördelten Rohrenden (1, 2) zweier Rohre, umfassend zwei Rohre mit gebördelten Rohrenden,
wobei ein Distanzelement (7) vorgesehen ist, welches Distanzelement (7) an einem ersten Ende eine erste Formschlussausnehmung (8) zur formschlüssigen Aufnahme des Bördels am Rohrende (1, 2) des einen Rohres sowie an einem zweiten Ende eine zweite Formschlussausnehmung (9) zur formschlüssigen Aufnahme des Bördels am Rohrende (1, 2) des anderen Rohres aufweist,
wobei weiterhin eine Schraubenmutter (3) zur Aufnahme des einen Rohrendes (1, 2) vorgesehen ist, in welche Schraubenmutter (3) das Distanzelement (7) im Verbindungszustand mit der Maßgabe eingeführt ist, dass das von der Schraubenmutter (3) aufgenommene Rohrende (1, 2) mit seinem Bördel in die zugeordnete Formschlussausnehmung (8, 9) des Distanzelementes (7) einfasst,
wobei fernerhin eine Schraube (4) zur Aufnahme des anderen Rohrendes (1, 2) vorgesehen ist, welche Schraube (4) im Verbindungszustand mit ihrem aufgenommenen Rohrende (1, 2) in die Schraubenmutter (3) mit der Maßgabe eingeschraubt ist, dass das von der Schraube (4) aufgenommene Rohrende (1, 2) mit seinem Bördel in die zugeordnete Formschlussausnehmung (8, 9) des Distanzelementes (7) einfasst,
wobei
die Schraubenmutter (3) innenseitige Formschlusselemente aufweist und wobei der Bördel des im Verbindungszustand in der Schraubenmutter (3) aufgenommenen Rohrendes (1, 2) Komplementär-Formschlusselemente aufweist und wobei die innenseitigen Formschlusselemente im Verbindungszustand in die Komplementär-Formschlusselemente eingreifen und **dadurch** das aufgenommene Rohr ende (1, 2) gegen eine Verdrehung relativ zur Schraubenmutter (3) gesichert ist.
oder
wobei die Schraubenmutter (3) innenseitige Formschlusselemente aufweist, welche Formschlusselemente mit der Maßgabe ausgebildet sind, dass sie beim Herstellen der Schraubverbindung in den Bördel des im Verbindungszustand in der Schraubenmutter (3) aufgenommenen Rohrendes (1, 2) einschneiden, so dass sich dabei Komplementär-Formschlusselemente in dem Bördel bilden, und **dadurch** das aufgenommene Rohrende (1, 2) gegen eine Verdrehung relativ zur Schraubenmutter (3) gesichert ist.

2. Schraubverbindungsvorrichtung nach Anspruch 1, wobei zumindest eine Formschlussausnehmung (8, 9), vorzugsweise beide Formschlussausnehmungen (8, 9) des Distanzelementes (7) zur formschlüssigen Aufnahme eines Bördels (6) am zugeordneten Rohrende (1, 2) ausgebildet sind, welcher Bördel eine rohraußenseitige konusförmige Anschlussfläche aufweist, wobei sich der zugeordnete Konus zum Stirnende des Rohrendes (1, 2) hin verjüngt.

3. Schraubverbindungsvorrichtung nach einem der Ansprüche 1 oder 2, wobei zumindest eine Formschlussausnehmung (8, 9), vorzugsweise beide Formschlussausnehmungen (8, 9) des Distanzelementes (7) zur formschlüssigen Aufnahme eines F-Bördels (6) am zugeordneten Rohrende (1, 2) ausgebildet ist.

4. Schraubverbindungsvorrichtung nach einem der Ansprüche 1 bis 3, wobei das Distanzelement (7) im Verbindungszustand in eine Aufnahmeöffnung (10) der Schraubenmutter (3) eingesteckt ist.

5. Schraubverbindungsvorrichtung nach einem der Ansprüche 1 bis 3, wobei die Aufnahmeöffnung (10) der Schraubenmutter (3) ein Innengewinde aufweist und wobei das Distanzelement (7) ein zu dem Innengewinde komplementäres Außengewinde aufweist und wobei das Distanzelement (7) im Verbindungszustand in die Aufnahmeöffnung (10) eingeschraubt ist.

6. Schraubverbindungsvorrichtung nach einem der Ansprüche 1 bis 5, wobei die Aufnahmeöffnung (10) der Schraubenmutter (3) sowohl zur Aufnahme des Distanzelementes (7) als auch zur Aufnahme der Schraube (4) vorgesehen ist.

7. Schraubverbindungsvorrichtung nach einem der Ansprüche 1 bis 6, wobei die Schraubenmutter (3) einen Aufnahmekanal (12) mit gegenüber der Aufnahmeöffnung (10) reduziertem Durchmesser aufweist, welcher Aufnahmekanal (12) zur Aufnahme des einen Rohrendes (1, 2) vorgesehen ist.

8. Schraubverbindungsvorrichtung nach einem der Ansprüche 1 bis 7, wobei die Schraubenmutter (3) eine Anschlagfläche (13) aufweist, welche Anschlagfläche (13) den Bördel des in der Schraubenmutter (3) aufgenommenen Rohrendes (1, 2) im Verbindungszustand hinterfasst.

9. Schraubverbindungsvorrichtung nach einem der Ansprüche 1 bis 8, wobei die Schraube (4) eine Stirnfläche (16) aufweist, welche Stirnfläche (16) den Bördel des in der Schraube (4) aufgenommenen Rohrendes (1, 2) hinterfasst.

10. Schraubverbindungsvorrichtung nach einem der Ansprüche 1 bis 9, wobei das Distanzelement (7) an zumindest einer Formschlussausnehmung (8, 9) eine Oberfläche aufweist, die mit der Maßgabe eingerichtet ist, dass das von einem Rohrende (1, 2) aufgebrachte Drehmoment funktionssicher übertragen wird.

## Claims

1. Screw-connection device for connecting beaded pipe ends (1, 2) of two pipes, comprising two pipes with beaded pipe ends,
wherein a distance element (7) is provided, said distance element (7) features on a first end a first form-closed recess (8) for form-closed accommodation of the bead on the pipe end (1, 2) of the one pipe
as well as a second form-closed recess (9) on a second end for form-closed accommodation of the bead on the pipe end (1, 2) of the other pipe,
wherein, furthermore a screw nut (3) is provided for receiving the one pipe end (1, 2) in said screw nut (3), the distance element (7) in the connected state is fitted such that the screw nut (3) encloses the pipe end (1, 2) with its bead in the provided form-closed recess (8, 9) of the distance element (7),
wherein, furthermore, a screw (4) is provided for accommodating the other pipe end (1, 2), said screw (4), in the connected state, with its accommodated pipe end (1, 2) inside the screw nut (3), is screwed such that the pipe end (1, 2) is accommodated by the screw (4) with its bead in the provided form-closed recess (8, 9) of the distance element (7),
wherein the screw nut (3) features internal form-closed elements, and wherein the bead of the pipe end (1, 2) accommodated inside the screw nut (3) in the connected state features a complementary form-closed element and wherein the internally form-closed element in the connected state engages in the complementary form-closed elements and as a result the accommodated pipe end (1, 2) is secured against rotation relative to the screw nut (3),
or
wherein, the screw nut (3) internally features form-closed elements, said form-closed elements being formed such that during the manufacture of the screw connection they cut into the bead of the screw nut (3) in the connected state in the accommodated pipe end (1, 2) so that thereby the complementary form-closed elements form in the bead, and thus the accommodated pipe end (1, 2) is secured against rotation relative to the screw nut (3).

2. A screw-connection device according to Claim 1, wherein at least a form-closed recess (8, 9), preferably both form-closed recesses (8, 9) of the distance element (7) towards the form-closed receptacle of a bead (6) are formed on the corresponding pipe end (1, 2), said bead features a conical shaped connection surface externally on the pipe, wherein the corresponding cone is tapered towards the face end of the pipe end (1, 2).

3. A screw-connection device according to one of the Claims 1 or 2, wherein at least a form-closed recess (8, 9), preferably both form-closed recesses (8, 9) of the distance element (7) is/are formed for form-closed receptacle of a bead (6) on the corresponding pipe end (1, 2).

4. A screw-connection device according to one of the Claims 1 to 3, wherein in the connected state, the distance element (7) is fitted into a receptacle opening (10) of the screw nut (3).

5. A screw-connection device according to one of the Claims 1 to 3, wherein the receptacle opening (10) of the screw nut (3) features an internal thread and wherein the distance element (7) features an outer thread complementary to the internal thread and wherein the distance element (7) in the connected state is screwed into the receptacle opening (10).

6. A screw-connection device according to one of the Claims 1 to 5, wherein the receptacle opening (10) of the screw nut (3) is provided both for accommodating the distance element (7) as well as for accommodating the screw (4).

7. A screw-connection device according to one of the Claims 1 to 6, wherein the screw nut (3) features a receiving channel (12) with a reduced diameter relative to the receptacle opening (10), said receiving channel (12) is provided for accommodating the one pipe end (1, 2).

8. A screw-connection device according to one of the Claims 1 to 7, wherein the screw nut (3) features a stop face (13), said stop face (13) interlocks the bead of the pipe end (1, 2) accommodated in the screw nut (3) in the connected state.

9. A screw-connection device according to one of the Claims 1 to 8, wherein the screw (4) features a face surface (16), said face surface (16) interlocks the bead of the pipe end (1, 2) accommodated in the screw (4).

10. A screw-connection device according to one of the Claims 1 to 9, wherein the distance element (7) on at least one form-closed recess (8, 9) features a surface made such that torque applied from one pipe end (1, 2) is safely transmitted.

## Revendications

1. Dispositif de raccord à vis pour le raccordement des bouts de tubes bordés (1, 2) de deux tubes, comprenant deux tubes aux bouts bordés,
un élément d'écartement (7) étant prévu, lequel élément d'écartement (7) présente, sur une première extrémité, un premier évidement à engagement positif (8) pour le logement à engagement positif du bord relevé sur le bout de tube (1, 2) de l'un des tubes ainsi que, sur une seconde extrémité, un second évidement à engagement positif (9) pour le logement à engagement positif du bord relevé sur le bout de tube (1, 2) de l'autre tube,
un écrou (3) étant en outre prévu pour le logement de l'un des bouts de tube (1, 2), dans lequel écrou (3) est inséré l'élément d'écartement (7) à l'état de raccordement, de manière à ce que le bout de tube (1, 2) logé dans l'écrou (3) soit, avec son bord relevé, compris dans l'évidement à engagement positif correspondant (8, 9) de l'élément d'écartement (7),
une vis (4) étant en outre prévue pour le logement de l'autre bout de tube (1, 2), laquelle vis (4), à l'état de raccordement, est vissée dans l'écrou (3) avec son bout de tube logé (1, 2) de manière à ce que le bout de tube (1, 2) logé dans la vis (4) soit, avec son bord relevé, compris dans l'évidement à engagement positif correspondant (8, 9) de l'élément d'écartement (7),
l'écrou (3) présentant des éléments à engagement positif disposés sur le côté intérieur et le bord relevé du bout de tube (1, 2) logé dans l'écrou (3) à l'état de raccordement présentant des éléments complémentaires à engagement positif et les éléments à engagement positif disposés sur le côté intérieur ayant prise, à l'état de raccordement, dans les éléments complémentaires à engagement positif et le bout de tube logé (1, 2) étant ainsi bloqué contre une torsion par rapport à l'écrou (3)
ou
l'écrou (3) présentant des éléments à engagement positif disposés sur le côté intérieur, lesquels éléments à engagement positif sont exécutés de manière à ce que, lors de l'établissement du raccordement vissé, ils entaillent le bord relevé du bout de tube (1, 2) logé dans l'écrou (3) à l'état de raccordement, de sorte que des éléments complémentaires à engagement positif se forment simultanément et que le bout de tube logé (1, 2) est ainsi bloqué contre une torsion par rapport à l'écrou (3).

2. Dispositif de raccord à vis selon la revendication 1, au moins un évidement à engagement positif (8, 9), de préférence les deux évidements à engagement positif (8, 9) de l'élément d'écartement (7) étant exécutés pour le logement à engagement positif d'un bord relevé (6) sur le bout de tube correspondant (1, 2), lequel bord relevé présente une surface de raccordement en forme de cône, disposée sur le côté extérieur du tube, le cône correspondant se rétrécissant en direction de l'extrémité frontale du bout de tube (1, 2).

3. Dispositif de raccord à vis selon l'une quelconque des revendications 1 ou 2, au moins un évidement à engagement positif (8, 9), de préférence les deux évidements à engagement positif (8, 9) de l'élément d'écartement (7) étant exécutés pour le logement à engagement positif d'un bord relevé (6) de type F sur le bout de tube correspondant (1, 2).

4. Dispositif de raccord à vis selon l'une quelconque des revendications 1 à 3, l'élément d'écartement (7), à l'état de raccordement, étant enfoncé dans une ouverture de logement (10) de l'écrou (3).

5. Dispositif de raccord à vis selon l'une quelconque des revendications 1 à 3, l'ouverture de logement (10) de l'écrou (3) présentant un filet femelle et l'élément d'écartement (7) présentant un filet mâle complémentaire au filet femelle et l'élément d'écartement (7), à l'état de raccordement, étant vissé dans l'ouverture de logement (10).

6. Dispositif de raccord à vis selon l'une quelconque des revendications 1 à 5, l'ouverture de logement (10) de l'écrou (3) étant ménagée aussi bien pour le logement de l'élément d'écartement (7) que pour le logement de la vis (4).

7. Dispositif de raccord à vis selon l'une quelconque des revendications 1 à 6, l'écrou (3) présentant un canal de logement (12) de diamètre réduit par rapport à l'ouverture de logement (10), lequel canal de logement (12) est ménagé pour loger l'un des bouts de tube (1, 2).

8. Dispositif de raccord à vis selon l'une quelconque des revendications 1 à 7, l'écrou (3) présentant une surface de butée (13), laquelle surface de butée (13), à l'état de raccordement, entoure par l'arrière le bord relevé du bout de tube (1, 2) logé dans l'écrou (3).

9. Dispositif de raccord à vis selon l'une quelconque des revendications 1 à 8, la vis (4) présentant une surface frontale (16), laquelle surface frontale (16) entoure par l'arrière le bord relevé du bout de tube (1, 2) logé dans la vis (4).

10. Dispositif de raccord à vis selon l'une quelconque des revendications 1 à 9, l'élément d'écartement (7) présentant sur au moins un évidement à engagement positif (8, 9) une surface aménagée de manière à ce que le couple apporté par un bout de tube (1, 2) soit transmis de manière fonctionnelle.
